# EUROPEAN PATENT APPLICATION

(11) **EP 3 885 265 A1**
(43) Date of publication of application: **29.09.2021**
(21) Application number: 21164589.0
(22) Date of filing: 24.03.2021
(51) Int. Cl.: B64D 15/12

(54) **HEATER POWER MODULATION BASED ON OUTSIDE AIR TEMPERATURE AND AIRCRAFT VELOCITY**

(30) Priority: 24.03.2020 US 202016828666
(71) Applicant: Goodrich Corporation, Charlotte, NC 28217-4578 (US)
(72) Inventor: ZADELL, Alex, Willoughby, OH 44094 (US); BOTURA, Galdemir Cezar, Akron, OH 44313 (US); SELVARAJ, Sugumaran, 560067 Bangalore, Karnataka (IN); RIDOUANE, El Hassan, Blackpool, Cork, T23 A5W0 (IE); DEBBADI, Karthik, Cork, T23 K19X (IE)
(74) Representative: Dehns

(57) **Abstract**

A system for heating an aircraft component of an aircraft includes a heater mat (110) located adjacent the aircraft component and to generate heat. The system further includes a controller (202) coupled to the heater mat and configured to receive an aircraft speed of the aircraft and an outside air temperature (OAT), and to control the heater mat based on the OAT and the aircraft speed.

## Description

### FIELD

The present disclosure relates to systems and methods for heating aircraft components using heating mats.

### BACKGROUND

Various aircraft components (such as a nacelle, a wing, or the like) may be subjected to relatively cold temperatures (e.g., below freezing) as well as moisture. This combination may result in ice formation on the components. In that regard, heating mats may be placed on such aircraft components at locations that are susceptible to ice formation (such as leading edges of the components). The heating mats may be controlled to reduce the likelihood of ice forming on the components.

### SUMMARY

Disclosed herein is a system for heating an aircraft component of an aircraft. The system includes a heater mat located adjacent the aircraft component and to generate heat. The system further includes a controller coupled to the heater mat and configured to receive an aircraft speed of the aircraft and an outside air temperature (OAT), and to control the heater mat based on the OAT and the aircraft speed.

In any of the foregoing embodiments, the controller is configured to control the heater mat by increasing power to the heater mat in response to the aircraft speed increasing and by decreasing power to the heater mat in response to the aircraft speed decreasing.

In any of the foregoing embodiments, the controller is further configured to control the heater mat by increasing power to the heater mat in response to the OAT decreasing and by decreasing power to the heater mat in response to the OAT increasing.

In any of the foregoing embodiments, the controller is configured to control the heater mat by increasing or decreasing a duty cycle of power provided to the heater mat.

In any of the foregoing embodiments, the controller is configured to use the OAT to determine a main duty cycle and to use the aircraft speed as an additive to the main duty cycle.

In any of the foregoing embodiments, the controller is configured to use the aircraft speed to determine a main duty cycle and to use the OAT as an additive to the main duty cycle.

Any of the foregoing embodiments may further include a temperature sensor located adjacent or in the heater mat and configured to detect the OAT.

In any of the foregoing embodiments, the controller is configured to receive the OAT from an aircraft computer of the aircraft.

Any of the foregoing embodiments may further include a speed sensor located adjacent or in the heater mat and configured to detect the aircraft speed.

In any of the foregoing embodiments, the controller is configured to receive the aircraft speed from an aircraft computer of the aircraft.

In any of the foregoing embodiments, the controller is further configured to receive a liquid water content (LWC) of air outside the aircraft, and to control the heater mat further based on the LWC.

In any of the foregoing embodiments, the controller is further configured to receive an angle of attack (AOA), and to control the heater mat further based on the AOA

Also disclosed is a system for heating an aircraft component of an aircraft. The system includes a heater mat located adjacent the aircraft component and to generate heat. The system further includes a temperature sensor configured to detect an outside air temperature (OAT). The system further includes a controller coupled to the temperature sensor and the heater mat and configured to receive an aircraft speed of the aircraft and to control the heater mat based on the OAT and the aircraft speed.

In any of the foregoing embodiments, the controller is configured to control the heater mat by increasing power to the heater mat in response to the aircraft speed increasing and by decreasing power to the heater mat in response to the aircraft speed decreasing.

In any of the foregoing embodiments, the controller is further configured to control the heater mat by increasing power to the heater mat in response to the OAT decreasing and by decreasing power to the heater mat in response to the OAT increasing.

Also disclosed is a method for heating an aircraft component of an aircraft. The method includes receiving, by a controller, an aircraft speed of the aircraft and an outside air temperature (OAT). The method further includes controlling, by the controller, a heater mat located adjacent the aircraft component based on the aircraft speed and the OAT.

In any of the foregoing embodiments, controlling the heater mat further includes controlling the heater mat by increasing power to the heater mat in response to the aircraft speed increasing and by decreasing power to the heater mat in response to the aircraft speed decreasing.

In any of the foregoing embodiments, controlling the heater mat further includes controlling the heater mat by increasing power to the heater mat in response to the OAT decreasing and by decreasing power to the heater mat in response to the OAT increasing.

In any of the foregoing embodiments, controlling the heater mat further includes controlling the heater mat by increasing or decreasing a duty cycle of power provided to the heater mat.

In any of the foregoing embodiments, controlling the heater mat further includes using the OAT to determine a main duty cycle and using the aircraft speed as an additive to the main duty cycle.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft including various components, in accordance with various embodiments;
FIG. 2 is a block diagram illustrating a system for heating an aircraft component, in accordance with various embodiments;
FIG. 3 is a flowchart illustrating a method for heating an aircraft component, in accordance with various embodiments; and
FIGS. 4A, 4B, and 4C illustrate various duty cycles assigned by a controller of FIG. 2, according to various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

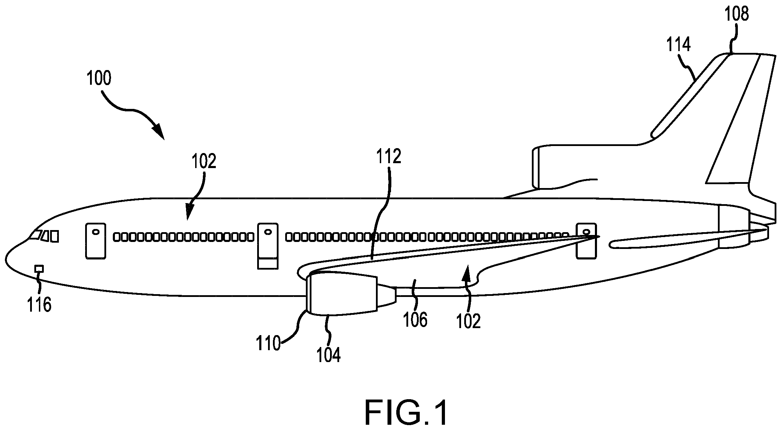

Referring now to FIG. 1, an aircraft 100 is shown. The aircraft 100 may include multiple aircraft components 102 which may be susceptible to ice formation thereon. For example, these aircraft components 102 may include a nacelle 104, a wing 106, a tail wing 108, or the like. Heater mats may be located on areas of the aircraft components 102 that are most susceptible to ice formation (e.g., leading edges of the components 102). For example, a heater mat 110 may be located on a leading edge of the nacelle 104, a heater mat 112 may be located on a leading edge of the wing 106, and a heater mat 114 may be located on a leading edge of the tail wing 108.

The aircraft 100 may further include an aircraft computer 116. The aircraft computer 116 may include a logic device such as one or more of a central processing unit (CPU), an accelerated processing unit (APU), a digital signal processor (DSP), a field programmable gate array (FPGA), an application specific integrated circuit (ASIC), or the like. In various embodiments, the aircraft computer 116 may further include any non-transitory memory known in the art. The memory may store instructions usable by the logic device to perform operations as described herein. The aircraft computer 116 may be coupled to various components of the aircraft 100 and may be capable of receiving, detecting, calculating, or determining various pieces of information regarding the aircraft 100 and its environment. For example, the aircraft computer 116 may be capable of determining an aircraft speed of the aircraft 100, an outside air temperature (OAT) corresponding to a temperature of air outside of the aircraft 100, a liquid water content (LWC) of the air outside of the aircraft 100, or the like.

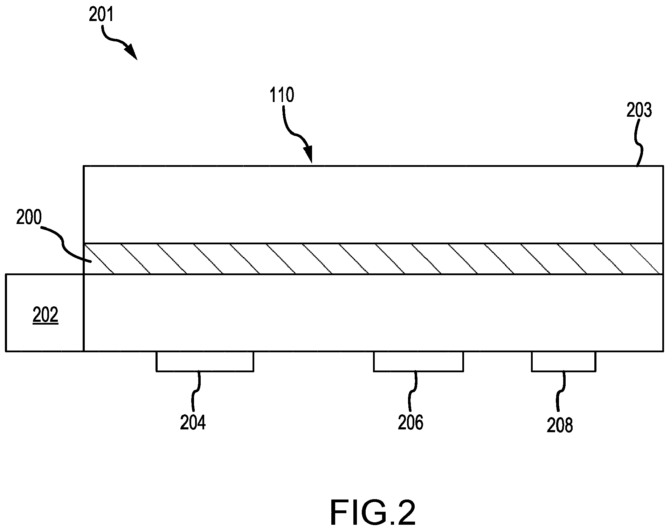

Referring now to FIG. 2, a system 201 for heating an aircraft component, such as an aircraft component 102 of FIG. 1, is shown. The system 201 includes the heater mat 110 and a controller 202. The controller 202 may include a logic device such as one or more of a central processing unit (CPU), an accelerated processing unit (APU), a digital signal processor (DSP), a field programmable gate array (FPGA), an application specific integrated circuit (ASIC), or the like. In various embodiments, the controller 202 may further include any non-transitory memory known in the art. The memory may store instructions usable by the logic device to perform operations as described herein.

In various embodiments, the system 201 may further include a temperature sensor 204, a speed sensor 206, a LWC sensor 208, or the like. The sensors 204, 206, 208 may be located adjacent to or in the heater mat 110 or may be separate from the heater mat 110. Likewise, the controller 202 may be located adjacent to or in the heater mat 110 or may be separate from the heater mat 110. The controller 202 may be in electrical communication with the aircraft computer 116 of FIG. 1.

The heater mat 110 may include a heating element 200 located in a substrate 203. The substrate 203 may include any substrate such as silicone, rubber, plastic, or the like. The heating element 200 may convert electricity into heat (i.e., thermal energy) to increase a temperature of a corresponding aircraft component in order to reduce the likelihood of ice developing on the aircraft component.

The temperature sensor 204 may include any temperature sensor capable of detecting data corresponding to a temperature in the environment of the temperature sensor 204 (e.g., OAT). For example, the temperature sensor 204 may include one or more resistance temperature detection devices.

The speed sensor 206 may include any speed sensor capable of detecting a relative speed of the structure to which the speed sensor 206 is attached (e.g., an aircraft fuselage, airfoil, or other aircraft component). For example, the speed sensor 206 may include a global positioning system (GPS) sensor, an inertial measurement unit (IMU) sensor, a gyroscope, an accelerometer, or the like.

The LWC sensor 208 may include any sensor capable of detecting a liquid water content, e.g., water vapor, in the environment of the LWC sensor 208. For example, the LWC sensor 208 may detect a measurement of mass of liquid per unit volume of air, for example, in grams of liquid water per cubic meter of air or pounds of water per cubic foot.

The controller 202 may control the amount of power provided to the heating element 200 based on various factors. For example, the controller 202 may control the amount of power provided the heating element 200 based on at least one of the aircraft speed (received from the aircraft computer 116 or from the speed sensor 206), the OAT (received from the aircraft computer 116 or from the temperature sensor 204), or the LWC (received from the aircraft computer 116 or from the LWC sensor 208).

In various embodiments, the controller 202 may control the power provided to the heating element 200 by adjusting the duty cycle of the provided power. In particular, the controller 202 may increase the amount of power provided to the heating element 200 in response to the aircraft speed increasing and may decrease the amount of power provided to the heating element 200 in response to the aircraft speed decreasing. Similarly, the controller 202 may increase the amount of power provided to the heating element 200 in response to the OAT decreasing and may decrease the amount of power provided to the heating element 200 in response to the OAT increasing. Likewise, the controller 202 may increase the amount of power provided to the heating element 200 in response to the LWC increasing and may decrease the amount of power provided to the heating element 200 in response to the LWC decreasing.

In various embodiments, a LWC measurement may be inaccurate or imprecise, thus resulting in undesirable control by the controller 202. In that regard, it may be desirable to control the heating element 200 based on the aircraft speed and the OAT only.

In various embodiments, the controller 202 may only provide power to the heating element 200 in response to water being present in the atmosphere, in response to the OAT being less than 32 degrees Fahrenheit (0 degrees Celsius), and the aircraft being off the ground (i.e., in flight).

As mentioned above, the controller 202 may adjust the power provided to the heating element 200 by increasing or decreasing a duty cycle of the power provided to the heating element 200. In that regard and in various embodiments, the OAT may be used by the controller 202 to determine a main duty cycle of the power, and at least one of the aircraft speed, the LWC, or an angle of attack (AOC) of the aircraft may be used as an additive to the main duty cycle. In various embodiments, the controller 202 may use the aircraft speed to determine a main duty cycle of the power, and at least one of the OAT, the LWC, or the AOA as an additive to the main duty cycle. The AOA may be received from the aircraft as a signal and may be related to pressure distribution, stagnation and air speed over the airfoil. The location of the heater and associated power density are related to the AOA.

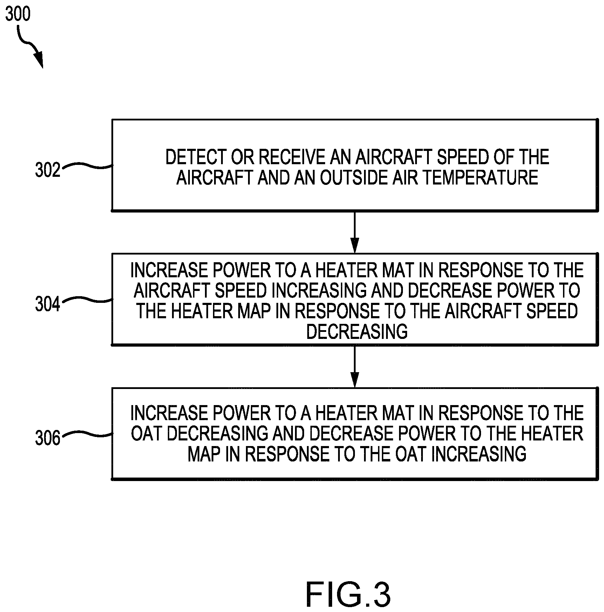

Referring now to FIG. 3, a method 300 for heating an aircraft component is shown. The method begins in block 302 where at least one of an aircraft speed, an OAT, or a LWC is detected by a sensor or received from an aircraft computer. The aircraft speed, the OAT, the LWC, and/or the AOA may then be received by a controller associated with a heating mat.

In block 304, the controller may increase an amount of power provided to the heater mat in response to the aircraft speed increasing, and may decrease the amount of power provided to the heater mat in response to the aircraft speed decreasing.

In block 306, the controller may increase the amount of power provided to the heater mat in response to the OAT decreasing and may decrease the amount of power provided to the heater mat in response to the OAT increasing.

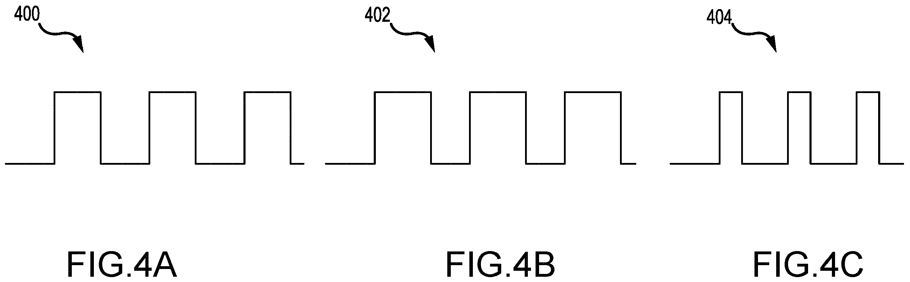

Turning now to FIGS. 2, 4A, 4B, and 4C, exemplary control of the heating element 200 by the controller 202 is shown. The controller 202 may initially determine a first duty cycle 400 of the power provided to the heating element 200. In response to determining that the aircraft speed has increased or the OAT has decreased, the controller 202 may control the heating element 200 to receive power of a second duty cycle 402 which provides more power to the heating element 200. In response to determining that the aircraft speed has decreased or the OAT has increased, the controller 202 may control the heating element 200 to receive a third duty cycle 404 which provides less power to the heating element 200.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments within the scope of the invention as defined by the claims.

## Claims

**1.** A system for heating an aircraft component of an aircraft, the system comprising:
a heater mat (110) located adjacent the aircraft component and to generate heat; and
a controller (202) coupled to the heater mat and configured to receive an aircraft speed of the aircraft and an outside air temperature, OAT, and to control the heater mat based on the OAT and the aircraft speed.

**2.** The system of claim 1, further comprising a temperature sensor (204) located adjacent or in the heater mat and configured to detect the OAT.

**3.** A system for heating an aircraft component of an aircraft, the system comprising:
a heater mat (110) located adjacent the aircraft component and to generate heat;
a temperature sensor (204) configured to detect an outside air temperature, OAT; and
a controller (206) coupled to the temperature sensor and the heater mat and configured to receive an aircraft speed of the aircraft and to control the heater mat based on the OAT and the aircraft speed.

**4.** The system of any preceding claim, wherein the controller is configured to control the heater mat by increasing power to the heater mat in response to the aircraft speed increasing and by decreasing power to the heater mat in response to the aircraft speed decreasing.

**5.** The system of claim 4, wherein the controller is further configured to control the heater mat by increasing power to the heater mat in response to the OAT decreasing and by decreasing power to the heater mat in response to the OAT increasing.

**6.** The system of claim 5, wherein the controller is configured to control the heater mat by increasing or decreasing a duty cycle of power provided to the heater mat.

**7.** The system of claim 6, wherein the controller is configured to use the OAT to determine a main duty cycle and to use the aircraft speed as an additive to the main duty cycle, or wherein the controller is configured to use the aircraft speed to determine a main duty cycle and to use the OAT as an additive to the main duty cycle.

**8.** The system of any preceding claim, wherein the controller is configured to receive the OAT from an aircraft computer of the aircraft.

**9.** The system of any preceding claim, further comprising a speed sensor (206) located adjacent or in the heater mat and configured to detect the aircraft speed.

**10.** The system of any preceding claim, wherein the controller is configured to receive the aircraft speed from an aircraft computer of the aircraft.

**11.** The system of any preceding claim, wherein the controller is further configured to receive a liquid water content (LWC) of air outside the aircraft, and to control the heater mat further based on the LWC.

**12.** The system of any preceding claim, wherein the controller is further configured to receive an angle of attack (AOA), and to control the heater mat further based on the AOA.

**14.** The system of claim 13, wherein the controller is configured to control the heater mat by increasing power to the heater mat in response to the aircraft speed increasing and by decreasing power to the heater mat in response to the aircraft speed decreasing.

**13.** A method for heating an aircraft component of an aircraft, the method comprising:
receiving, by a controller (202), an aircraft speed of the aircraft and an outside air temperature, OAT; and
controlling, by the controller, a heater mat (110) located adjacent the aircraft component based on the aircraft speed and the OAT.

**14.** The method of claim 13, wherein controlling the heater mat further includes controlling the heater mat by increasing power to the heater mat in response to the aircraft speed increasing and by decreasing power to the heater mat in response to the aircraft speed decreasing.

**15.** The method of claim 14, wherein controlling the heater mat further includes controlling the heater mat by increasing power to the heater mat in response to the OAT decreasing and by decreasing power to the heater mat in response to the OAT increasing, and optionally wherein controlling the heater mat further includes controlling the heater mat by increasing or decreasing a duty cycle of power provided to the heater mat, and optionally wherein controlling the heater mat further includes using the OAT to determine a main duty cycle and using the aircraft speed as an additive to the main duty cycle.
